**Europäisches Patentamt**

**European Patent Office**

**Office européen des brevets**

(19)

(11) Numéro de publication : **0 351 913 B1**

(12)

# FASCICULE DE BREVET EUROPEEN

(45) Date de publication du fascicule du brevet :
25.09.91 Bulletin 91/39

(51) Int. Cl.⁵ : **F16B 19/06, F16B 5/04, B21J 15/02**

(21) Numéro de dépôt : 89201864.9

(22) Date de dépôt : 14.07.89

(54) **Organe de fixation tel que rivet, procédé d'assemblage et assemblage obtenu.**

(30) Priorité : 22.07.88 FR 8810040

(43) Date de publication de la demande :
24.01.90 Bulletin 90/04

(45) Mention de la délivrance du brevet :
25.09.91 Bulletin 91/39

(84) Etats contractants désignés :
AT BE CH DE ES FR GB GR IT LI LU NL SE

(56) Documents cités :
US-A- 3 282 315
US-A- 3 747 467
US-A- 3 748 948
US-A- 3 871 264
US-A- 3 927 458
US-A- 4 000 680
US-A- 4 051 592
US-A- 4 202 243

(73) Titulaire : ATELIERS DE LA HAUTE-GARONNE
- ETABLISSEMENTS AURIOL & Cie S.a.R.L.
Flourens
F-31130 Balma (FR)
Titulaire : Auriol, Jean-Marc
Les Blanches Flourens
F-31130 Balma (FR)
Titulaire : Bornes, Philippe
La Madeleine Flourens
F-31130 Balma (FR)

(72) Inventeur : Auriol, Jean-Marc
Les Blanches Flourens
F-31130 Balma (FR)
Inventeur : Bornes, Philippe
La Madeleine Flourens
F-31130 Balma (FR)

(74) Mandataire : Barre, Philippe
Cabinet Barre-Gatti-Laforgue 95 rue des
Amidonniers
F-31069 Toulouse Cédex (FR)

## Description

L'invention concerne un organe de fixation, en particulier un rivet, pour assembler des matériaux notamment des tôles dans le domaine aéronautique. Elle s'étend au procédé de pose desdits organes et aux assemblages obtenus. L'invention vise à améliorer la répartition des contraintes de compression entre l'organe de fixation et les matériaux assemblés.

Dans le domaine aéronautique les assemblages sont appelés à subir des efforts importants et on sait que leur tenue en fatigue est directement liée à la répartition des contraintes de compression qui sont introduites lors de la pose entre l'organe de fixation et les matériaux à assembler. Les zones les plus critiques se situent au niveau de la tête préformée de l'organe de fixation et à la jonction entre tige et tête. Le problème mal résolu à l'heure actuelle est celui d'obtenir, à la fois, d'une part un gonflement radial suffisant de la tête pour garantir une bonne étanchéité entre celle-ci et les matériaux assemblés, d'autre part, une déformation et une expansion suffisante de celle-ci vers la zone de jonction tête/tige ainsi que dans la tige pour atteindre dans ces zones un niveau de contraintes de compression élevé, garantissant une tenue en fatigue satisfaisante.

Pour tenter de résoudre ce problème, on a donné à la tête de rivet des formes particulières, cette tête étant écrasée lors de la pose en vue d'engendrer un fluage de la matière vers les tôles à assembler ; les solutions adoptées jusqu'à ce jour ont consisté à ajouter en saillie sur la face frontale de la tête du rivet des protubérances ou parties bombées qui sont ensuite écrasées lors de la pose et engendrent un fluage plus important qu'une tête plate. Toutefois, les formes prévues ont tendance à privilégier soit le gonflement radial de la tête au détriment de l'expansion au niveau de la jonction tête/tige et de la tige, soit, à l'inverse le fluage vers la tige au détriment du gonflement de la tête.

Ainsi certains organes de fixation sont-ils prévus avec une tête dotée d'une face frontale bombée (Normes standard Dassault série 3.507.2 et.3, 1968 ; 3.502.1, 1966 ; Normes standard FIAT 12830 du 5.2.71 destinées à l'avion MRCA ; brevets US 4.000.680, 3.927.458, 3.747.467, 3.748.948) et l'écrasement de cette tête bombée accroît le fluage vers la tige, améliorant les contraintes de compression dans celle-ci ; cependant, avec les efforts d'écrasement habituels, ce surplus de matière dans la portion centrale de la tête a tendance à réduire le gonflement radial de ladite tête et à entraîner une mauvaise étanchéité entre celle-ci et les tôles. D'autres organes de fixation comportent une tête où le surplus de matière est prévu sur la périphérie de la face frontale de celle-ci, en particulier sous la forme d'un dôme annulaire en saillie sur cette face frontale (brevet US 4.051.592). Lors de l'écrasement, cette saillie périphérique favorise le gonflement radial de la tête, entraînant une bonne étanchéité de celle-ci dans les tôles, mais c'est alors au détriment du fluage vers la tige où les contraintes de compression demeurent faibles, avec des risques de rupture en cas de contraintes alternées.

La présente invention se propose d'apporter une solution satisfaisante au problème posé, en fournissant un organe de fixation perfectionné adapté pour améliorer la répartition des contraintes de compression entre l'organe de fixation et les matériaux assemblés.

A cet effet, l'organe de fixation visé par l'invention est du type comprenant une tige axiale destinée à se loger dans un trou des matériaux à assembler, et une tête située à une extrémité de ladite tige et appelée à être déformée par écrasement au cours de la pose, la tête possédant une face frontale ; selon la présente invention, cet organe se caractérise en ce que sur la face frontale est ménagée une gorge annulaire s'étendant autour de l'axe, ladite gorge annulaire étant sensiblement positionnée sur ladite face frontale au voisinage de l'alignement de la surface extérieure de la tige et étant adaptée pour délimiter dans la tête deux portions, l'une centrale, l'autre périphérique, aptes à se déformer indépendamment sous l'effet de l'écrasement.

Par "gorge sensiblement positionnée au voisinage de l'alignement de la surface extérieure de la tige", on entend que ladite gorge peut être décalée par rapport à cette surface extérieure de tige d'une distance pouvant aller jusqu'à un tiers environ du diamètre de la tige.

Ainsi, au lieu de prévoir des excès de matière en saillie sur la face frontale comme c'est le cas dans les techniques connues, l'invention réalise au moyen de la gorge précitée une séparation de cette tête en deux portions qui pourront se déformer de façon indépendante lors de l'écrasement : la portion centrale est le siège d'un fluage engendrant la création de contraintes de compression dans la zone de jonction entre tige et tête et dans la tige, cependant que la portion périphérique conditionne le gonflement radial de la tête. De la sorte, il est possible dans chaque application d'obtenir à la fois le gonflement radial de tête désiré et le fluage central nécessaire pour créer le niveau voulu de contraintes de compression dans la tige.

L'organe de fixation visé par l'invention peut en particulier consister en un rivet dont l'écrasement de la tête sus-évoquée (tête préformée) sera réalisé au moment de la pose en même temps que la formation de la deuxième tête. De façon connue en soi, ce rivet est de préférence un rivet à tête fraisée possédant un listel cylindrique, appelé à être inséré lors de la pose dans un trou possédant d'un côté une fraisure à lamage conjuguée.

Selon un mode de réalisation préféré, la tête de rivet est réalisée de sorte que sa face frontale possède deux niveaux, l'un correspondant à la portion centrale (côté centripète par rapport à la gorge), l'autre correspondant à la portion périphérique (côté centrifuge par rapport à ladite gorge). Chacun de ces niveaux est prévu pour dépasser de la surface des matériaux à assembler, d'une distance appropriée pour assurer de façon satisfaisante lors de l'écrasement, d'une part, le fluage central vers la jonction tige/tête, et vers la tige (niveau correspondant à la portion centrale), d'autre part, le gonflement (essentiellement radial) de la tête (niveau correspondant à la portion périphérique). En particulier dans le cas d'un rivet en alliage léger destiné à assurer l'assemblage de tôles en alliage léger, le niveau de la portion centrale peut être prévu en retrait par rapport à celui de la portion périphérique afin que l'écrasement affecte d'abord la zone périphérique et soit d'amplitude plus importante pour celle-ci.

L'invention s'étend à un procédé d'assemblage de matériaux au moyen d'un rivet tel que précédemment décrit. Ce procédé est du type consistant à percer dans lesdits matériaux un trou formé d'un alésage s'ouvrant d'un côté par un lâmage, à introduire dans ledit trou un rivet comprenant, d'une part, une tête possédant un listel cylindrique, adaptée pour se loger dans le lâmage du trou, d'autre part, une tige axiale adaptée pour se loger dans l'alésage et pour dépasser à l'opposé de la tête, et à écraser ladite tête, tout en formant à l'autre extrémité de la tige du rivet une deuxième tête ; le procédé selon la présente invention se caractérise en ce que :
   — l'on introduit dans le trou un rivet dont la tête possède une face frontale pourvue d'une gorge annulaire positionnée au voisinage de l'alignement de la surface extérieure de la tige afin de délimiter dans ladite tête une portion centrale et une portion périphérique, aptes à se déformer indépendamment,
   — l'on écrase la tête par une pression sur sa face frontale de façon à amener, d'une part, la portion périphérique à gonfler dans le lâmage, d'autre part, la portion centrale à se déformer vers la zone de jonction entre tige et tête et vers la tige et à comprimer dans ces zones les matériaux à assembler.

Par ailleurs, l'invention s'étend aux assemblages réalisés par mise en oeuvre de ce procédé, en particulier assemblages de tôle dans le domaine aéronautique ; ces assemblages se caractérisent par une répartition des contraintes de compressions entre rivet et matériaux, telle que celles-ci passent par un maximum dans la zone de jonction entre tige et tête de rivet, tout en gardant une valeur positive sur toute la hauteur de la tête.

D'autres caractéristiques, buts et avantages de l'invention ressortiront de la description qui suit en référence aux dessins annexés qui présentent à titre d'exemple non limitatif un mode de réalisation de rivet conforme à l'invention, illustrent le procédé d'assemblage au moyen dudit rivet et schématisent l'assemblage obtenu et la répartition des contraintes de compression ; sur ces figures qui font partie intégrante de la présente description :
   — la figure 1 est une coupe axiale d'un rivet conforme à l'invention,
   — la figure 2 est une coupe de tôles percées en vue d'être assemblées au moyen dudit rivet,
   — les figures 3, 4 et 5 illustrent les phases du procédé d'assemblage,
   — la figure 6 est une coupe de l'assemblage obtenu et la figure 7 un diagramme des contraintes de compression entre tôles et rivet.

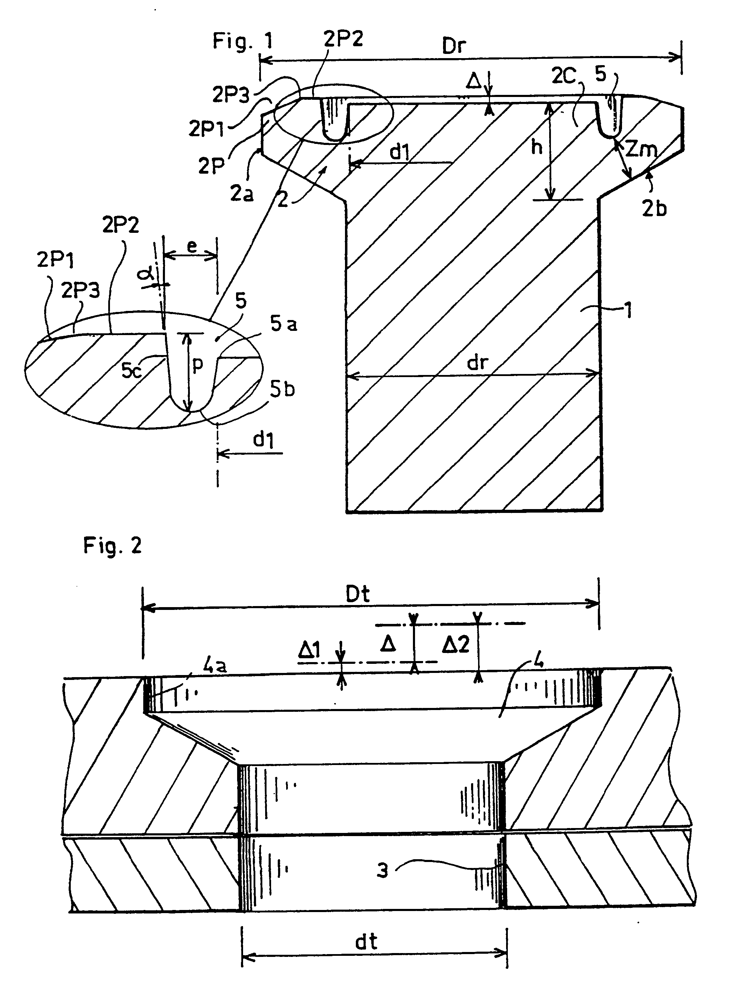

Le rivet conforme à l'invention, présenté à titre d'exemple à la figure 1, est en alliage d'aluminium et est destiné à réaliser un assemblage de tôles elles-mêmes en alliage d'aluminium.

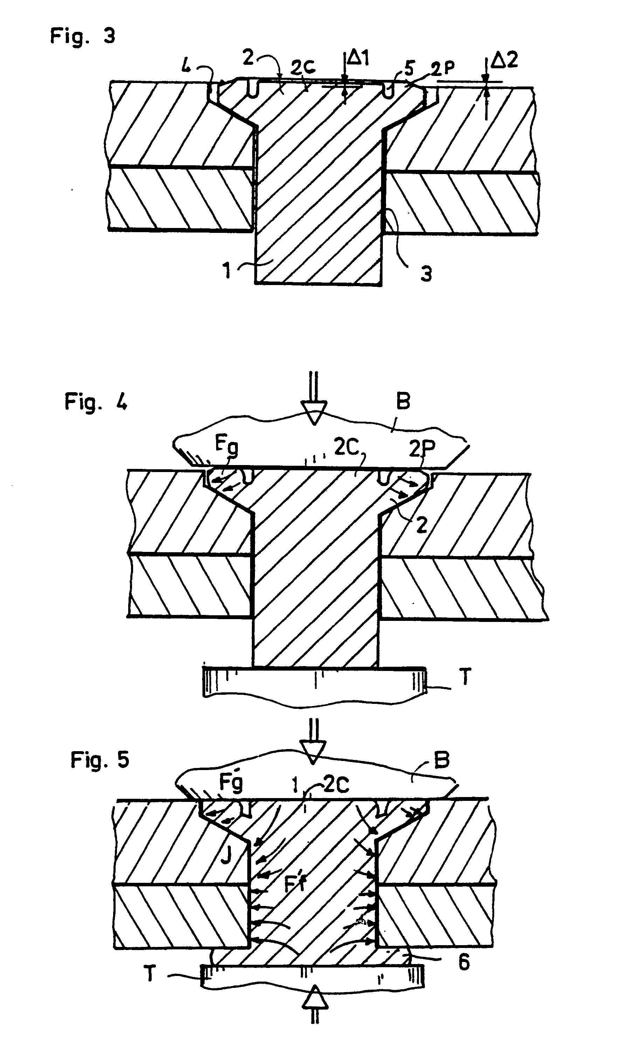

Ce rivet comprend une tige cylindrique 1 qui s'étend le long de son axe et une tête 2 de diamètre plus grand, située à une extrémité de ladite tige. Ledit rivet est destiné à être introduit dans un trou ménagé dans les tôles à assembler (figure 2), qui comporte un alésage cylindrique 3 dans lequel est appelée à se loger la tige 1 et, d'un côté, une fraisure 4 dans laquelle est appelée à se loger la tête 2.

La tige cylindrique 1 du rivet possède un diamètre $-d_r-$ inférieur à celui $-d_t-$ de l'alésage 3 du trou de façon à conditionner un jeu au plus égal à 0,1 mm entre tige et alésage. La longueur de la tige 1 est ajustée pour que celle-ci dépasse des tôles à l'opposé de la tête 2.

Cette tête 2 est une tête fraisée comprenant un listel cylindrique 2a et une partie conique 2b dont l'angle de conicité peut de façon classique être égal à 120° (angle au sommet).

La fraisure 4 du trou présente un angle semblable afin de recevoir ladite partie conique 2b et s'ouvre sur la surface des tôles par un lâmage 4a.

Le listel cylindrique 2a de la tête possède un diamètre $-D_r-$ inférieur à celui du lâmage 4a du trou $-D_t-$ de façon à conditionner un jeu au plus égal à 0,5 mm entre tête et lâmage.

Par ailleurs, la face frontale de la tête de rivet est pourvue d'une gorge annulaire 5 qui est ménagée à peu près dans l'alignement de la surface extérieure de la tige 1. En l'exemple l'arête interne 5a de cette gorge se situe sur une circonférence de diamètre $-d_1-$ tel que $d_1 = d_r \mp 0{,}3\, d_r$.

Cette gorge 5 possède un fond 5b de section semi-circulaire et des flancs 5c s'ouvrant en légère contre-dépouille vers la face frontale ; par "légère dépouille", on entend un angle d'ouverture très approximativement de l'ordre de 3°.

L'épaisseur $-e-$ de la gorge 5 n'est pas une valeur critique et pourra être prévue en pratique sensiblement comprise entre $0{,}08\, d_r$ et $0{,}12\, d_r$.

La gorge 5 définit, entre son fond 5b et la base de la tête 2, une zone de moindre épaisseur $Z_m$ qui délimite une portion centrale de tête 2C située vers l'axe, et une portion périphérique 2P située de l'autre côté. La profondeur -p- de la gorge rapportée à la hauteur -h- de la tête est ajustée de façon que, sous l'effet d'une pression d'écrasement de la tête, les déformations de ces portion centrale 2C et portion périphérique 2P soient indépendantes (ou peu liées). En l'exemple d'un rivet en alliage léger d'aluminium, le rapport p/h peut être compris entre 0,1 et 0,5, notamment de l'ordre de 0,3.

De plus la face frontale de la tête 2 est plane dans sa portion centrale 2C, le niveau de celle-ci se trouvant en retrait par rapport à celui de la portion périphérique 2P ; cette portion périphérique est du type bombée à méplat comprenant une partie ascendante $2P_1$ venant se rattacher à un méplat $2P_2$ par un congé de raccordement $2P_3$.

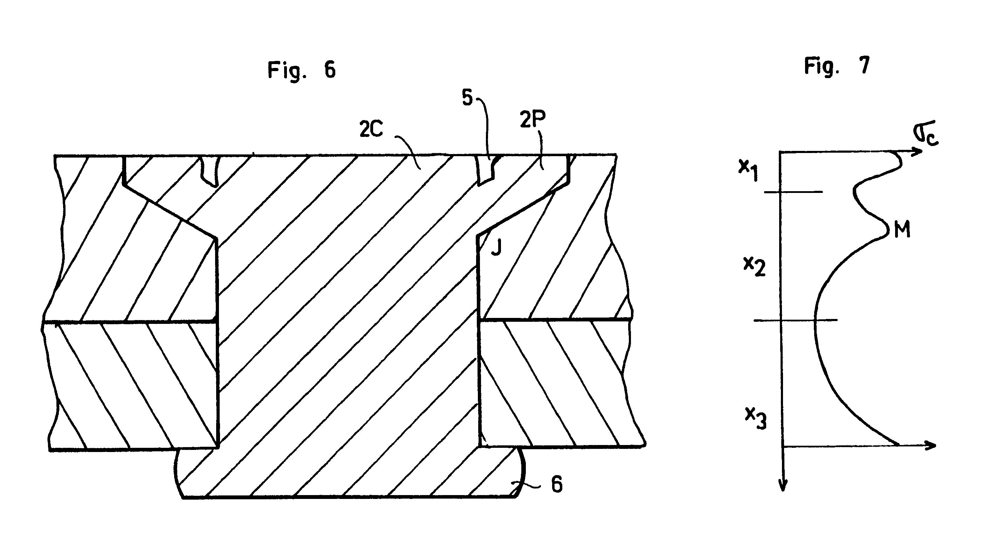

La différence $\Delta$ des niveaux entre la portion centrale 2C en retrait et la portion périphérique 2P (méplat) est sensiblement comprise, en l'exemple, entre 0,05 mm et 0,2 mm. De plus (figures 2 et 3) le niveau de la portion centrale 2C est prévu de façon à dépasser d'une distance $\Delta_1$ de la surface des tôles et le niveau de la portion périphérique d'une distance $\Delta_2$, telles que :

$$0,2 \text{ mm} \leq \Delta_2 \leq 0,4 \text{ mm et } 0,05 \text{ mm} \leq \Delta_2 - \Delta_1 = \Delta \leq 0,2 \text{ mm.}$$

A titre d'exemple, les valeurs suivantes donnent de bons résultats pour un rivet en alliage d'aluminium (2017 ou 2117) de diamètre -$d_r$- de l'ordre de 4 mm ayant une tête de diamètre -$D_r$- de l'ordre de 6,5 mm:

$$\Delta_1 = 0,2 \text{ mm}, \Delta_2 = 0,4 \text{ mm.}$$

La pose du rivet ci-dessus décrit est illustrée aux figures 3, 4 et 5 et consiste à introduire le rivet dans le trou des tôles, de façon que sa tige 1 traverse l'alésage 3 du trou et dépasse par l'extrémité opposée à la tête, et que ladite tête 2 se loge dans la fraisure 4 du trou (figure 3).

Une bouterolle B et un tas T, classiques, permettent ensuite d'écraser la tête 2 et de former une seconde tête 6 à l'extrémité de la tige de rivet. L'écrasement de la tête 2 s'opère en deux phases : une phase de pré-écrasement (figure 4) où la bouterolle écrase la portion périphérique 2P de la tête et n'est pas encore en contact avec la portion centrale 2C. Cette portion périphérique, désolidarisée de la portion centrale 2C par la gorge 5, subit un gonflement sensiblement radial illustré par la flèche Fg.

Puis la bouterolle B prend appui avec la portion centrale 2C et écrase également cette dernière (figure 5) ; le gonflement de la portion périphérique 2P se poursuit (flèche F'g), cependant que la portion centrale 2C subit un fluage axialo-radial (flèche F'f) qui engendre une expansion au niveau de la zone de jonction J entre tige et tête de rivet et dans la tige. La seconde tête 6 est formée simultanément de l'autre côté de la tige.

La figure 6 présente en coupe l'assemblage obtenu, la figure 7 montrant la répartition des contraintes radiales de compression $\sigma$ centre tôles et rivet. On peut distinguer trois zones où les contraintes de compression sont dues à des phénomènes différents : une zone $x_1$ (au voisinage du listel de la tête) où les contraintes de compression sont essentiellement dues au gonflement de la portion périphérique 2P, une zone $x_2$ (au voisinage de la jonction tête/tige) où les contraintes de compression sont essentiellement dues au fluage de la portion centrale 2C et à l'expansion de celle-ci, ces contraintes passant par un maximum M dans cette zone, et une zone $x_3$ où les contraintes sont essentiellement dues au gonflement de la tige lors de la formation de la seconde tête.

## Revendications

1. Organe de fixation pour la réalisation d'assemblages, du type comprenant une tige axiale (1) destinée à se loger dans un trou des matériaux à assembler, et une tête (2) située à une extrémité de ladite tige et appelée à être déformée par écrasement au cours de la pose, la tête possédant une face frontale caractérisé en ce que sur la face frontale est ménagée une gorge annulaire (5) s'étendant autour de l'axe, ladite gorge annulaire étant sensiblement positionnée sur ladite face frontale au voisinage de l'alignement de la surface extérieure de la tige (1) et étant adaptée pour délimiter dans la tête deux portions, l'une centrale (2C), l'autre périphérique (2P), aptes à se déformer indépendamment sous l'effet de l'écrasement.

2. Organe de fixation selon la revendication 1, caractérisé en ce que la gorge annulaire (5) possède une profondeur (p) adaptée pour définir dans la tête une zone de moindre épaisseur (Zm) entre le fond (5b) de la gorge et la base de la tête, les deux portions, centrale (2C) et périphérique (2P), à déformation indépendante étant situées de part et d'autre de cette zone de moindre épaisseur.

3. Organe de fixation selon l'une des revendications 1 ou 2, caractérisé en ce que la gorge annulaire (5) est ménagée sur la face frontale de la tête de sorte que son arête interne (5a) se situe sur une circonférence de diamètre $d_1$ tel que $d_1 = d_r \mp 0,3 \, d_r$ où $d_r$ est le diamètre de la tige.

4. Organe de fixation selon l'une des revendications 1, 2 ou 3, du type rivet, appelé à être inséré dans un trou possédant d'un côté un lâmage, dans lequel la tête (2) de rivet possède un listel cylindrique (2a).

5. Organe de fixation selon la revendication 4, réalisé en alliage léger d'aluminium, caractérisé en ce que le rapport de la profondeur (p) de la gorge (5) à la hauteur (h) de la tête est compris entre 0,1 et 0,5.

6. Organe de fixation selon l'une des revendications 4 ou 5, caractérisé en ce que la face frontale de la tête (2) possède deux niveaux, l'un correspondant à la portion centrale (2C) situé en retrait par rapport à l'autre correspondant à la portion périphérique (2P).

7. Organe de fixation selon la revendication 6, caractérisé en ce que, sur la face frontale de la tête, la différence ($\Delta$) des niveaux entre la portion centrale (2C) en retrait et la portion périphérique (2P) est sensiblement comprise entre 0,05 mm et 0,2 mm.

8. Organe de fixation selon l'une des revendications 4, 5, 6 ou 7 dans lequel la portion périphérique (2P) de la tête est du type bombée à méplat ($2P_1$, $2P_2$).

9. Organe de fixation selon l'une des revendications 4, 5, 6, 7 ou 8, caractérisé en ce que l'épaisseur -e- de la gorge (5) est sensiblement comprise entre $0,08\ d_r$ et $0,12\ d_r$ où $d_r$ est le diamètre de la tige.

10. Organe de fixation selon l'une des revendications 4 à 9, dans lequel la gorge (5) de la tête possède un fond (5b) de section sensiblement semi-circulaire et des flancs (5c) s'ouvrant en légère dépouille vers la face frontale.

11. Procédé d'assemblage de matériaux consistant à percer dans lesdits matériaux un trou formé d'un alésage (3) s'ouvrant d'un côté par un lâmage (4a), à introduire dans ledit trou un rivet comprenant, d'une part, une tête (2b) possédant un listel cylindrique (2a), adaptée pour se loger dans le lâmage du trou, d'autre part, une tige axiale (1) adaptée pour se loger dans l'alésage et pour dépasser à l'opposé de la tête, et à écraser ladite tête tout en formant à l'autre extrémité de la tige du rivet une deuxième tête (6), ledit procédé étant caractérisé en ce que :

— l'on introduit dans le trou un rivet dont la tête (2) possède une face frontale pourvue d'une gorge annulaire (5) positionnée au voisinage de l'alignement de la surface extérieure de la tige (1) afin de délimiter dans ladite tête une portion centrale (2C) et une portion périphérique (2P), aptes à se déformer indépendamment,

— l'on écrase la tête par une pression sur sa face frontale de façon à amener, d'une part, la portion périphérique (2P) à gonfler dans le lâmage (4a), d'autre part, la portion centrale (2C) à se déformer vers la zone de jonction (J) entre tige et tête et vers la tige et à comprimer dans ces zones les matériaux à assembler.

12. Procédé d'assemblage selon la revendication 11, caractérisé en ce que l'on introduit dans le trou des matériaux un rivet :

— ayant une tige (1) de diamètre $-d_r$- inférieur à celui $-d_r$- de l'alésage du trou, de façon à conditionner un jeu au plus égal à 0,1 mm entre tige et alésage,

— ayant une tête fraisée (2b) d'angle correspondant à celui d'une fraisure (4) du trou, avec un listel de diamètre $-D_r$- inférieur à celui $-D_r$- du lâmage (4a) du trou de façon à conditionner un jeu au plus égal à 0,5 mm entre tête et lâmage,

— dont la face frontale de la tête (2) présente, dans sa portion centrale (2C), un niveau dépassant d'une distance $\Delta_1$ de la surface des matériaux à assembler, et dans sa portion périphérique (2P), un niveau dépassant d'une distance $\Delta_2$ de ladite surface, telles que 0,2 mm $\leqq \Delta_2 \leqq$ 0,4 mm et 0,05 mm $\leqq \Delta_2 - \Delta_1 <$ 0,2 mm.

13. Procédé d'assemblage selon l'une des revendications 11 ou 12, caractérisé en ce que l'on introduit dans le trou des matériaux un rivet ayant sur la face frontale de sa tête une gorge annulaire (5) agencée de sorte que son arête interne (5a) se situe sur une circonférence de diamètre $d_1$ tel que $d_1 = d_r \mp 0,15\ d_r$ où $d_r$ est le diamètre de la tige.

14. Assemblage de matériaux notamment de tôles dans le domaine aéronautique, réalisé par mise en oeuvre du procédé conforme à l'une des revendications 11, 12 ou 13 et se caractérisant par une répartition des contraintes de compressions (6c) entre rivet et matériaux, telle que celles-ci passent par un maximum (M) dans la zone de jonction (J) entre tige et tête de rivet, tout en gardant une valeur positive sur toute la hauteur de la tête.

## Patentansprüche

1. Befestigungselement zur Herstellung von Verbindungen der Art umfasset einen zur Einführung in ein Loch in den zu verbindenden Werkstücken bestimmten Axialschaft (1) und einen an einem Ende des besagten Schaftes befindlichen Kopf (2), der so beschaffen ist, daß er beim Setzen durch Stauchen verformt wird, wobei der besagte Kopf eine Endfläche aufweist, dadurch gekennzeichnet, daß die besagte Endfläche mit einer sich rings um die Achse erstreckenden Ringnut (5) versehen ist, wobei sich die besagte Ringnut im wesentlichen im Bereiche der Verlängerung der Außenfläche des Schaftes (1) an der besagten Endfläche befindet und so beschaffen ist, daß sie in dem Kopf zwei Bereiche abgrenzt, einen mittleren Bereich (2C) und einen anderen peripheren Bereich (2P), die so beschaffen sind, daß sie sich infolge des Stauchens unabhängig verformen.

2. Befestigungselement nach Anspruch 1, dadurch gekennzeichnet, daß Ringnut (5) eine Tiefe (p) aufweist, die so beschaffen ist, daß sie in dem Kopf eine Zone geringerer Dicke (Zm) zwischen dem Boden (5b) der Nut und der Unterseite des Kopfes abgrenzt, wobei die beiden Bereiche, der mittlere Bereich (2C) und der periphere Bereich (2P), die unabhängig verformbar sind, zu der einen und der anderen Seite der besagten Zone geringerer Dicke liegen.

3. Befestigungselement nach einem der Ansprüche 1 oder 2, dadurch gekennzeichnet, daß Ringnut (5) in der Endfläche des Kopfes vorgesehen ist, wobei sich ihr Innenrand (5a) auf einem Umkreis mit dem Durchmesser $d_1$ befindet, so daß $d_1 = d_r \mp 0.3 d_r$, wobei $d_r$ der Durchmesser des Schaftes ist.

4. Nietartiges Befestigungselement nach einem der Ansprüche 1, 2 oder 3, das zum Einsetzen in ein an der einen Seite mit einer Aussparung versehenes Loch bestimmt ist, in welchem Nietkopf (2) einen zylindrischen Rand (2a) aufweist.

5. Aus leichter Aluminiumlegierung gefertigtes Befestigungselement nach Anspruch 4, dadurch gekennzeichnet, daß das Verhältnis zwischen Tiefe (p) der Nut (5) und Höhe (h) des Kopfes zwischen 0,1 und 0,5 beträgt.

6. Befestigungselement nach einem der Ansprüche 4 oder 5, dadurch gekennzeichnet, daß die Endfläche des Kopfes (2) zwei Ebenen aufweist, wobei die eine dem mittleren Bereich (2C) entspricht, der im Verhältnis zu dem anderen dem peripheren Bereich (2P) entsprechenden Bereich zurückgesetzt ist.

7. Befestigungselement nach Anspruch 6, dadurch gekennzeichnet, daß an der Endfläche des Kopfes der Höhenunterschied ($\Delta$) zwischen dem zurückgesetzten mittleren Bereich (2C) und dem peripheren Bereich (2P) im wesentlichen zwischen 0,05 mm und 0,2 mm beträgt.

8. Befestigungselement nach einem der Ansprüche 4, 5, 6 oder 7, bei dem der periphere Bereich (2P) des Kopfes von halbflach gewölbter Art ($2P_1$, $2P_2$) ist.

9. Befestigungselement nach einem der Ansprüche 4, 5, 6, 7 oder 8, dadurch gekennzeichnet, daß die Dicke -e- der Nut (5) im wesentlichen zwischen 0,08 $d_r$ und 0,12 $d_r$ beträgt, wobei $d_r$ der Durchmesser des Schaftes ist

10. Befestigungselement nach einem der Ansprüche 4 bis 9, bei dem die Nut (5) des Kopfes einen Boden (5b) mit im wesentlichen halbkreisförmigem Querschnitt sowie Seiten (5c) aufweist, die sich mit leichter Neigung in Richtung der Endfläche aufweiten.

11. Verfahren zum Verbinden von Werkstücken, das darin besteht, daß in den besagten Werkstücken ein in einer Bohrung bestehendes Loch (3) gefertigt wird, das an der einen Seite in einer Aussparung (4a) mündet, sowie darin, daß in das besagte Loch ein Niet eingeführt wird, der einerseits an den Kopf (2b) mit einem zylindrischen Rand (2a) zum Einsetzen in die Aussparung des Loches aufweist, und andererseits einen axialen Schaft (1) zum Einsetzen in die Bohrung, der an dem dem Kopf gegenüberliegenden Ende austritt, sowie darin, daß der besagte Kopf gestaucht wird, während an dem anderen Ende des Nietschafts ein zweiter Kopf (6) gebildet wird, wobei das besagte Verfahren dadurch gekennzeichnet ist :

— daß man in das Loch einen Niet einführt, dessen Kopf (2) eine mit einer Ringnut (5) versehene Endfläche aufweist, die sich nahe der Verlängerung der Außenfläche des Schaftes (1) befindet, um in dem besagten Kopf einen mittleren Bereich (2C) und einen peripheren Bereich (2P) abzugrenzen, die so beschaffen sind, daß sie sich unabhängig verformen,

— daß man den Kopf durch Ausüben einer Kraft auf seine Endfläche staucht, um einerseits zu bewirken, daß sich der periphere Bereich (2P) in Aussparung (4a) aufweitet und daß sich andererseits der mittlere Bereich (2C) auf die Verbindungszone (J) zwischen Schaft und Kopf und auf den Schaft zu verformt, und um die zu verbindenden Werkstücke in diesen Zonen zu verdichten.

12. Verbindungsverfahren nach Anspruch 11, dadurch gekennzeichnet, daß man in das durch die Werkstücke führende Loch einen Niet einführt :

— bei dem der Durchmesser -dr- von Schaft (1) kleiner ist als der Durchmesser -dr- der Bohrung des Loches, um zwischen Schaft und Bohrung einen Abstand zu bewirken, der höchstens 0,1 mm beträgt,

— bei dem ein Senkkopf (2b) vorgesehen ist, dessen Winkel dem Winkel einer Ausfräsung (4) des Loches entspricht, mit einem Rand, dessen Durchmesser $-D_r-$ kleiner ist als der Durchmesser $-D_t-$ der Aussparung (4a) des Loches, um zwischen Kopf und Aussparung einen Abstand zu bewirken, der höchstens 0,5 mm beträgt,

— bei dem die Endfläche des Kopfes (2) in ihrem mittleren Bereich (2C) eine Höhe aufweist, die mit einem Abstand $\Delta 1$ über die Oberfläche der zu verbindenden Werkstücke hinausragt, sowie in seinem peripheren Bereich (2P) eine Höhe, die mit einem Abstand $\Delta 2$ über die besagte Oberfläche hinausragt, so daß $0,2\ mm \leq \Delta_2 \leq 0,4\ mm$ und $0,05\ mm \leq \Delta_2 - \Delta_1 < 0,2\ mm$ ist.

13. Verbindungsverfahren nach einem der Ansprüche 11 oder 12, dadurch gekennzeichnet, daß man in das in Werkstücken befindliche Loch einen Niet einführt, bei dem der Kopf an dessen Endfläche eine Ringnut (5) aufweist, die so beschaffen ist, daß ihr Innenrand (5a) an einem Umkreis mit dem Durchmesser $d_1$ liegt, so daß $d_1 = d_r \mp 0,15 d_r$, wobei $d_r$ der Durchmesser des Schaftes ist.

14. Vereinigung von Werkstücken, insbesondere Blechen auf dem Sektor des Flugmaschinenbaus, bewirkt durch Durchführung des Verfahrens nach einem der Ansprüche 11, 12 oder 13, und dadurch gekennzeichnet, daß die Druckspannungen ($\sigma c$) zwischen dem Niet und den Werkstücken so verteilt sind, daß diese in der Verbindungszone (J) zwischen Schaft und Nietkopf einen Höchstwert (M) erreichen und gleichzeitig entlang der gesamten Kopfhöhe einen positiven Wert aufweisen.

## Claims

1. Fixing means for producing assemblies, of the type comprising an axial shaft (1) intended to be located within a hole in the materials to be assembled and a head (2) located at one end of said shaft and intended for deformation by upsetting while it is being set, with the head having an end face characterised in that an annular groove (5) extending about the axis is provided in said end face, said annular groove being substantially located in said end face close to the extension of the outer surface of shaft (1) and being so designed as to delimit within the head two sections, a central section (2C) and another peripheral section (2P) capable of being independently deformed in the process of upsetting.

2. Fixing means according to claim 1, characterised in that annular groove (5) has a depth (p) so designed as to define within the head a zone of lesser thickness (Zm) between the base (5b) of the groove and the base of the head, the two sections, i.e. the central section (2C) and the peripheral section (2P), subject to independent deformation being located on either side of this zone of lesser thickness.

3. Fixing means according to one of claims 1 or 2, characterised in that annular groove (5) is provided in the end face of the head so that its inner edge (5a) is located on a circumference of diameter $d_1$ so that $d_1 = d_r \mp 0.3\, d_r$, $d_r$ being the diameter of the shaft.

4. Rivet-type fixing means according to one of claims 1, 2 or 3, intended for insertion into a hole having on one side a recess in which head (2) of the rivet has a cylindrical rim (2a).

5. Fixing means according to claim 4, made from light aluminium alloy, characterised in that the ratio between depth (p) of groove (5) and height (h) of the head is comprised between 0.1 and 0.5.

6. Fixing means according to one of claims 4 or 5, characterised in that the end face of head (2) has two levels, one corresponding to central section (2C), which is set back in relation to the other section corresponding to peripheral section (2P).

7. Fixing means according to claim 6, characterised in that, at the end face of the head, difference (Δ) between the levels of central section (2C), which is set back, and peripheral section (2P) is substantially comprised between 0.05 mm and 0.2 mm.

8. Fixing means according to one of claims 4, 5, 6 or 7, in which peripheral section (2P) of the head is of cambered semi-flat type (2P₁, 2P₂).

9. Fixing means according to one of claims 4, 5, 6, 7 or 8, characterised in that thickness -e- of groove (5) is substantially comprised between 0.08 $d_r$ and 0.12 $d_r$, $d_r$ being the diameter of the shaft.

10. Fixing means according to one of claim 4 to 9, in which groove (5) of the head has a base (5b) having a substantially semi-circular cross-section and sides (5c) opening out with a slight taper towards the end face.

11. Process for assembling materials consisting in piercing within said materials a hole formed by a bore (3) opening out at one side by a recess (4a), in introducing into said hole a rivet comprising, on the one hand, a head (2b) with a cylindrical rim (2a) so designed as to be located within the recess of the hole, and on the other hand an axial shaft (1) so designed as to be located within the bore while passing through the bore at the opposite end of the head, and in upsetting said head while forming at the other end of the rivet shaft a second head (6), said process being characterised in that :
— a rivet is introduced into the hole, whereby head (2) of said rivet has an end face provided with an annular groove (5) located close to the extension of the outer surface of shaft (1) so as to delimit whithin said head a central section (2C) and a peripheral section (2P), capable of being deformed independently ;
— the head is upset by applying pressure on the end face so as to cause, on the one hand, peripheral section (2P) to expand within recess (4a) and, on the other hand, central section (2C) to be deformed towards junction zone (J) between the shaft and the head and towards the shaft, and so as to compress the materials to be assembled within these zones.

12. Assembling process according to claim 11, characterised in that one introduces into the hole provided within the materials a rivet :
— having a shaft (1) of diameter -$d_r$- smaller than diameter -$d_t$- of the bore of the hole, so as to bring about a clearance corresponding to not more that 0.1 mm between shaft and bore,
— having a countersunk head (2b) with an angle corresponding to that of a milled section (4) of the hole, with a rim of diameter -$D_r$- smaller than diameter -$D_t$- of recess (4a) of the hole, so as to bring about a clearance corresponding to not more than 0.5 mm between head and recess,
— in which the end face of head (2) is in its central section (2C) at a level projecting by distance $\Delta_1$ from the surface of the materials to be assembled, and in its peripheral section (2P) a level projecting by distance $\Delta_2$ from said surface, so that $0.2\ \text{mm} \leq \Delta_2 \leq 0.4\ \text{mm}$ and $0.05\ \text{mm} \leq \Delta_2 - \Delta_1 < 0.2\ \text{mm}$.

13. Assembling process according to one of claims 11 or 12, characterised in that a rivet is introduced into the hole in the materials, said rivet having in the end face of its head an annular groove (5) so designed that its inner edge (5a) is located on a circumference of diameter $d_1$ such that $d_1 = d_r \mp 0.15\, d_r$, $d_r$ being the diameter of the shaft.

14. Assembly of materials, in particular sheets in the aviation sphere, brought about by applying the process as described in one of claims 11, 12 or 13 and characterised by a distribution of compressive stresses ($\sigma$c) between rivet and materials such that said stresses pass through a maximum (M) within junction zone (J) between the shaft and the head of the rivet while maintaining a positive value throughout the height of the head.

Fig. 1

Fig. 2

Fig. 3

Fig. 4

Fig. 5

Fig. 7

Fig. 6